# EUROPÄISCHE PATENTSCHRIFT

(11) **EP 1 166 328 B1**
(45) Veröffentlichungstag und Bekanntmachung des Hinweises auf die Patenterteilung: **19.11.2008**
(21) Anmeldenummer: 00907607.6
(22) Anmeldetag: 23.02.2000
(51) Int. Cl.: H01J 49/04

(54) **GASEINLASS ZUR ERZEUGUNG EINES GERICHTETEN UND GEKÜHLTEN GASSTRAHLS**
GAS INLET FOR PRODUCING A DIRECTIONAL AND COOLED GAS JET
DISPOSITIF D'ADMISSION DE GAZ DESTINE A ADMETTRE UN JET DE GAZ DIRIGE ET REFROIDI

(30) Priorität: 25.03.1999 DE 19913451
(43) Veröffentlichungstag der Anmeldung: 02.01.2002
(73) Patentinhaber: Helmholtz Zentrum München Deutsches Forschungszentrum für Gesundheit und Umwelt (GmbH), 85764 Neuherberg (DE)
(72) Erfinder: ZIMMERMANN, Ralf, D-80339 München (DE); ROHWER, Egmont, 0081 Lynnrodene (ZA); DORFNER, Ralph, D-85445 Niederding (DE); BOESL, Ulrich, D-84036 Landshut (DE); KETTRUP, Antonius, D-59821 Arnsberg (DE)
(74) Vertreter: Barth, Stephan Manuel
(86) Internationale Anmeldenummer: PCT/EP2000/001478
(87) Internationale Veröffentlichungsnummer: WO 2000/058996

(56) Entgegenhaltungen:
- EP-A- 0 860 859
- DOSKOW J E ET AL: "Development of internal jet targets for high-luminosity experiments" NUCLEAR INSTRUMENTS & METHODS IN PHYSICS RESEARCH, SECTION - A: ACCELERATORS, SPECTROMETERS, DETECTORS AND ASSOCIATED EQUIPMENT,NL,NORTH-HOLLAND PUBLISHING COMPANY. AMSTERDAM, Bd. A362, Nr. 1, 1. August 1995 (1995-08-01), Seiten 20-25, XP004009746 ISSN: 0168-9002
- TOYODA N ET AL: "Reactive sputtering by SF6 cluster ion beams" NUCLEAR INSTRUMENTS & METHODS IN PHYSICS RESEARCH, SECTION - B: BEAM INTERACTIONS WITH MATERIALS AND ATOMS,NL,NORTH-HOLLAND PUBLISHING COMPANY. AMSTERDAM, Bd. 121, Nr. 1, 1997, Seiten 484-488, XP004057969 ISSN: 0168-583X

## Beschreibung

Die Erfindung betrifft einen Gaseinlaß zur Erzeugung eines gerichteten und gekühlten Gasstahls in einer Ionenquelle oder einer UV/Fluoreszenzmeßzelle.

Bisher ist es üblich, das zu analysierende Gas effusiv in die Ionenquelle des Massenspektrometers einzubringen. Dabei führt eine Zuleitung (z. B. das Ende einer gaschromatographischen Kapillare) in die Ionenquelle, die eine geschlossene (z. B. viele CI- oder EI-Ionenquellen für Quadrupol- oder Sektorfeldmassenspektrometer) oder eine offene Bauweise (z. B. viele Ionenquellen für Flugzeitmassenspektrometer) haben kann. Im Fall von Ionenquellen mit geschlossener Bauweise wird dabei ein Bereich der Ionenquelle mit dem eingelassenen Gas "geflutet", d. h. die eingelassenen Atome oder Moleküle führen teilweise Stöße mit der Ionenquellen-Wandung durch, bevor sie ionisiert und im Massenspektrometer nachgewiesen werden. Die offene Bauweise vieler Ionenquellen für TOF-Massenspektrometer begünstigt den Einsatz von Atom- oder Molekularstrahltechniken. Dabei wird ein relativ gerichteter Gasstrahl durch die Ionenquelle geführt, der im Idealfall nur sehr wenig Wechselwirkung mit den Bauelementen derselben hat.

Für die Flugzeitmassenspektrometrie kommen dabei effusive Molekularstrahlen [2], sowie geskimmte [1] und ungeskimmte [3, 4] Uberschallmolekularstrahlen zum Einsatz (jeweils gepulst oder kontinuierlich (cw)). Uberschallmolekularstrahl-Einlaßsysteme erlauben eine Abkühlung des Analysengases im Vakuum durch adiabatische Expansion. Nachteilig ist jedoch, daß bei herkömmlichen Systemen die Expansion relativ weit entfernt vom Ort der Ionisation erfolgen muß. Da die Dichte des Expansionsgasstrahls (und damit die Ionenausbeute für ein gegebenes Ionisationsvolumen) mit dem Quadrat des Abstands von der Expansionsdüse abnimmt, ist die erreichbare Empfindlichkeit limitiert.

Effusive Molekularstrahl-Einlaßsysteme erlauben keine Abkühlung der Probe. Allerdings können Gaseinlaßsysteme für effusive Molekularstrahlen derart aufgebaut werden, daß über eine metallische Nadel, die in das Zentrum der Ionenquelle führt, der Gasaustritt direkt in den Ionisationsort geführt wird [2]. An diese Nadel wird dabei ein bestimmtes elektrisches Potential gelegt, um die Abzugsfelder in der Ionenquelle nicht zu stören. Die Nadel muß auf relativ hohe Temperaturen geheizt werden um ein Auskondensieren schwerflüchtiger Analytmoleküle in der Nadel zu verhindern. Dabei ist zu beachten, daß der kälteste Punkt nicht an der Nadelspitze liegen sollte. Die nötige Heizung der Nadel ist problematisch, da die Nadel gegenüber dem restlichen Aufbau elektrisch isoliert sein muß (z. B. durch ein Übergangsstück aus Keramik). Elektrische Isolatoren sind im allgemeinen auch thermische Isolatoren und erlauben nur einen sehr geringen Wärmefluß von z. B. der beheizten Zuleitung zur Nadel. Eine Heizung über elektrische Heizelemente oder IR-Strahler ist ebenfalls schwierig, da die Nadel zwischen die Abzugsplatten der Ionenquelle ragt.

Die Selektivität der Resonanzionisation mit Lasern (REMPI) ist, aufgrund der unterschiedlichen Kühlungseigenschaften, vom verwendeten Einlaßsystem abhängig. Neben dem effusiven Molekularstrahl-Einlaßsystem (EMB), das sich unter anderem zur Detektion ganzer Substanzklassen verwenden läßt, kann durch Verwendung eines Überschall-Molekularstrahl-Einlaßsystems (Jet) hochselektiv und teilweise sogar isomerenselektiv ionisiert werden. Bei den gebräuchlichen, für spektroskopische Experimente entwickelten Überschallgas-Düsen stellt die Ausnutzung der Probenmenge (d. h. die erreichbare Meßempfindlichkeit) keinen limitierenden Faktor dar. Weiterhin sind die bestehenden Systeme nicht auf die Vermeidung vom Memory-Effekten ausgelegt. Für die Anwendung von REMPI-TOFMS-Spektrometern für analytische Anwendungen ist die Entwicklung einer verbesserten Jet-Einlaßtechnik vorteilhaft. Dabei ist darauf zu achten, daß die Ventile aus inerten Materialien aufgebaut sind, um Memory-Effekte oder chemische Zersetzung (Katalyse) der Probenmoleküle zu vermeiden. Weiterhin sollten die Einlaßventile keine Totvolumina aufweisen. Außerdem ist es notwendig, das Ventil auf Temperaturen von mehr als 200° C heizen zu können, damit auch schwerflüchtige Verbindungen aus dem Massenbereich > 250 amu zugänglich sind. Zudem soll durch die Jet-Anordnung möglichst wenig an Empfindlichkeit gegenüber der effusiven Einlaßtechnik eingebüßt werden. Dies kann vor allem durch eine effektivere Ausnutzung der eingelassenen Probe im Vergleich zu bisherigen Jet-Anordnungen erreicht werden.

Diese Erhöhung geschieht z. B. dadurch, daß jeder Laserschuß einen möglichst großen Anteil der Probe trifft. Da das Anregungsvolumen durch die Ausmaße des Laserstrahls vorgegeben ist (eine Aufweitung des Laserstrahls würde den REMPI-Wirkungsquerschnitt verringern, der z. B. bei einer Zweiphotonenionisation mit dem Quadrat der Laserintensität skaliert), muß versucht werden, den räumlichen Überlapp von Molekularstrahl und Laserstrahl zu optimieren. Dieses kann z.B. durch einen gepulsten Einlaß realisiert werden. Boesl und Zimmermann et al. stellten beispielsweise eine heizbares, gepulstes Jet Ventil für analytische Anwendungen, wie z. B. für eine Gaschromatographie-Jet-REMPI-Kopplung, mit minimiertem Totvolumen vor [5].

Pepich et al. stellten eine GC-Überschallmolekularstrahl-Kopplung für die laserinduzierte Fluoreszenzspektroskopie (LIF) vor, bei der durch den gepulsten Einlaß und eine Probenverdichtung eine Erhöhung des Duty Cycles gegenüber dem effusiven Einlaß erreicht wurde [6]. Doskow et al. beschrieben einen Gaseinlaß, bei dem eine durch einen Kryostaten gekühlte Laval-Düse mit der Möglichkeit zur Thermostatisierung zwischen 25K und 300K einen Überschallmolekularstrahl erzeugt [10].

Aufgabe der Erfindung ist es, einen Gaseinlaß der eingangs genannten Art zur Verfügung zu stellen, der bei einfachem Aufbau eine effektive Kühlung eines kontinuierlichen Gasstrahls bei relativ geringem Einlaßvolumenstrom ermöglicht.

Gelöst wird diese Aufgabe durch die Merkmale des Patentanspruchs **1.** Die Unteransprüche beschreiben vorteilhafte Ausgestaltungen der Erfindung. Der 9. Anspruch nennt eine vorteilhafte Verwendung der Erfindung.

Die Vorrichtung hat gegenüber dem Stand der Technik folgende besondere Vorteile:

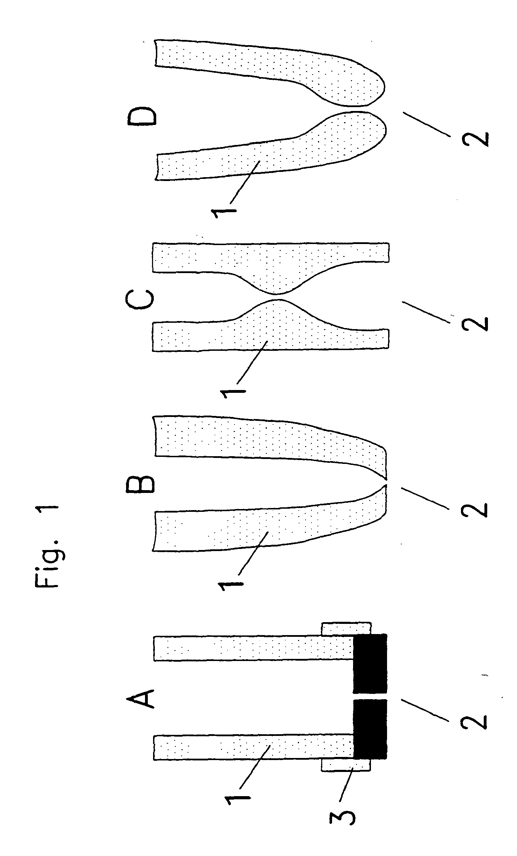

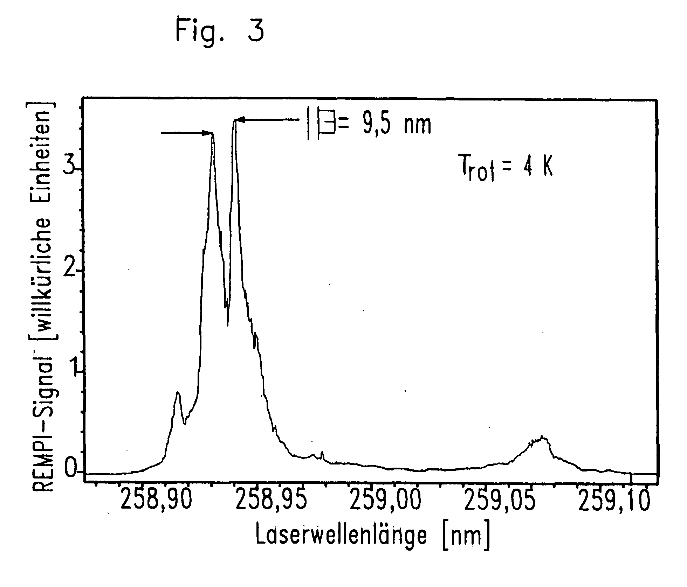

Die Überschallmolekularstrahl-Expansion kann direkt in die Ionenquelle gelegt werden. Dabei wird die prinzipiell höchste mögliche Dichte des Gasstrahls 4 im Ionisationsort erreicht. Besondere Vorteile der Gaszuführung bestehen darin, daß die Probe adiabatisch gekühlt wird, die Kapillare bis zu ihrem unterem Ende gut heizbar ist und eine sehr einfache Bauart ohne bewegliche Teile möglich ist. Die Vorrichtung kann so ausgestaltet werden, daß die Probenmoleküle nur mit inerten Materialien in Kontakt kommen. Durch Einstellung geeigneter Parameter (Gasdruck) kann eine Abkühlung des Gases durch eine adiabatische Expansion in das Vakuum des Massenspektrometers realisiert werden (Überschallmolekulekularstrahl 4), wobei i.a. der kontinuierliche Gasfluß in die Ionisationskammer in etwa dem eines kontinuierlichen effusiven Einlasses (siehe [7]) entspricht. Die Flußraten liegen bei effusiven Einlaßsystemen typischerweise im Bereich von 0,1-100 ml/min (1 bar). Gegenüber einem effusivem Kapillareinlaß ist bei dem erfindungsgemäßen Gaseinlaß die stärkere Ausrichtung des Überschall-Molekularstrahls 4 vorteilhaft, da eine bessere Überlappung von Laser und Gasstrahls erreicht werden kann (höhere Empfindlichkeit). Vor allem kann mit dem Gaseinlaß der eingangs genannten Art auch bei niedrigen Gasflüssen (< 10 ml/min) ein kontinuierlicher, gekühlter Jet-Gasstrahl erzeugt werden. Dieses gelingt, wie in Figur 3 gezeigt, beispielsweise sehr gut mit der in Figur 1 gezeigten Ausführung B. Eine Kühlung des eingelassenen Gases ist dabei für viele massenspektrometrische Fragestellungen von Vorteil. Die geringere interne Energie gekühlter Moleküle wirkt sich häufig durch einen verringerten Fragmentationsgrad im Massenspektrum aus. Besonders vorteilhaft ist die Kühlung für die Anwendung der Resonanzionisation mit Lasern (REMPI). Bei Verwendung eines soge- - nannten Überschallmolekularstrahl-Einlaßsystems (Jet) zur Kühlung des Gasstrahls kann mit REMPI hochselektiv (teilweise sogar isomerenselektiv) ionisiert werden [1,9]. Da die Kühlung durch die Expansion erfolgt, können die Probengaszuleitung, die Kapillare 1 und die Expansionsdüse 2 geheizt werden, ohne daß sich die Kühlungseigenschaften verschlechtern. Das ist wichtig für analytische Anwendungen. Ohne ausreichende Heizung könnten Probenbestandteile in der Zuleitung oder im Gaseinlaß auskondensieren. Eine wichtige Anwendung für die Erfindung ist die Überführung eines chromatographischen Eluenten oder eines kontinuierlichen Probengasflusses aus einer online-Probennahme(sonde) in einen gekühlten Überschallmolekularstrahl 4. Das hier beschriebene Einlaßsystem erlaubt es, den Expansionsort in die Ionenquelle des Massenspektrometers zu legen. Damit können die Ionen direkt oder nahe unter der Expansionsdüse 2 erzeugt werden, was sehr vorteilhaft für die erreichbare Nachweisempfindlichkeit ist.

Die Erfindung wird im folgenden anhand von Ausführungsbeispielen mit Hilfe der Figuren näher erläutert.

Dabei zeigt die
Figur 1 verschieden Düsenformen 2, die
Figur 2 eine mögliche Anordnung des Gaseinlasses in einer Ionenquelle, die
Figur 3 ein REMPI-Spektrum von Benzol aufgenommen mit einem erfindungsgemäßen Gaseinlaß.

Im folgenden werden zwei beispielhafte Anwendungen für den erfindungsgemäßen Gaseinlaß beschrieben. Dabei handelt es sich beim ersten Beispiel um die Anwendung in einer Ionenquelle für ein Massenspektrometer, beim zweiten um die Anwendung in einer Fluoreszenzzelle.

Die Kapillare 1 dient der Gaszuführung und hat einem typischen Innendurchmesser von 0,05 -10 mm. Am Ende weist die Kapillare 1 eine Verengung mit einen typischen minimalen Innendurchmesser von 1-50% des Kapillarinnendurchmessers auf, die im folgenden Düse 2 genannt wird. Die Kapillare 1 ist dabei mit der von der Düse 2 abgewandten Seite gasdicht an eine Probengaszufuhr angeschlossen, die über eine Vakuumdichtung in das Massenspektrometer geführt ist. Alternativ kann auch die von der Düse 2 abgewandten Seite der Kapillare 1 z.B. über eine O-Ring Dichtung (z. B. mit Kalrez®-O-Ringen) direkt aus der Vakuumkammer des Massenspektrometers geführt werden. Die Düse 2 befindet sich in oder nahe bei der Ionenquelle des Massenspektrometers und hat dabei vor allem zwei Aufgaben: Sie wirkt als Restriktor um den Fluß durch die Kapillare 1 zu mindern und damit ein gutes Vakuum im Analysengerät zu erhalten. Außerdem bildet sich durch die Expansion ins Vakuum ein Überschallmolekularstrahl 4 aus, wobei die Moleküle eine adiabatische Abkühlung erfahren. Die Figur 1 zeigt vier verschiedene Ausgestaltungen dieser Düse 2. Bei Beispiel A ist die Kapillare 1 durch eine durchbohrte Scheibe als Düse 2 abgeschlossen. Diese Ausführung eignet sich für alle Materialien (Glas, Keramik, Quarz) für die Kapillare 1, ist jedoch besonders gut geeignet für Metallkapillaren 1, die innen desaktiviert sein können. Als Metall ist Edelstahl besonders gut geeignet. In diesem Fall empfiehlt sich z. B. Silanisieren zur Desaktivierung. Auf dem Markt sind solche inertisierten Stahlkapillaren z.B. als Silocosteel® erhältlich. Als Scheibe kann vorteilhafterweise Saphir verwendet werden. Befestigt wird diese Scheibe beispielsweise mit einer Klemmhülse 3 oder Mineralkleber.

Bei den Ausführungsformen B, C und D handelt es sich um Düsen 2, die durch Auf- oder Anschmelzen und eventueller mechanischer Nachbearbeitung eines Endes der Kapillaren 1 gewonnen werden. Dabei bestehen Kapillare 1 und Düse 2 aus demselben Material, z.B. aus Quarz oder Glas. Bei Kapillaren 1 aus Metall oder Keramik muß, wenn eine Düse 2 der Ausführungsformen B, C oder D verwendet wird, ein Stück Quarz oder Glas zur Erzeugung der Düse angesetzt werden. Die Verbindung von Kapillare und Düse kann beispielsweise über Mineralkleber oder einen Klemmring 3 erfolgen. Alternativ kann die Düse 2 an die Kapillare 1 angeschmolzen werden. Die Herstellung der Ausführungsform B wird in [8] beschrieben. Die Ausführungen C und D können beispielsweise durch vorsichtiges Anschmelzen der Kapillare 1 aus Glas oder Quarz mit einem Mikrodüsenbrenner erzeugt werden. Die glatte Innenfläche bei den Ausführungen B,C und D ist wahrscheinlich für die hohe Güte (d. h. Kühlungseigenschaften) der beobachteten Molekularstrahlen 4 verantwortlich. Wichtig ist, daß der Druckabfall, im Gegensatz zu effusiven Einlassen über Kapillarrestriktoren, im wesentlichen über die Düse 2 erfolgt.

Für die Anwendung in einer Ionenquelle wird die Kapillare 1 im allgemeinen von außen mit leitfähigem Material beschichtet sein oder in einem dünnen Metallröhrchen geführt werden. Über eine Kontaktierung kann somit ein bestimmtes elektrisches Potential angelegt werden. Vorteilhaft ist für diesen Zweck auch die Verwendung von deaktiviertem Stahl (Silicosteel®). Weiterhin kann eine Stahlkapillare 1 direkt elektrisch beheizt werden (Wiederstandsheizung). Für diese Anwendung ist eine schmale Bauart der Kapillare 1 vorteilhaft, da so die Abzugsfelder der Ionenoptik weniger gestört werden. Weiterhin ist eine elektrisch leitende Beschichtung/Umhüllung der Kapillare 1 nötig um das elektrische Potential der Kapillare 1 dem Potentialverlauf in der Ionenquelle anzupassen.

Die Kapillare sollte für analytische Zwecke bevorzugt aus Quarzglas, das innen desaktiviert ist, bestehen, um Memoryeffekte zu vermeiden. Auch Keramik und Glas eignen sich dafür. Die lichte Weite der Düsenöffnung sollte höchstens 50% des Kapillareninnendurchmessers betragen. Besser eignen sich Kapillaren mit einer Düsenöffnung von weniger als 20 % des Kapillareninnendurchmessers. Beispielsweise kann die Düse durch Schmelzen oder auch durch Schmelzen und anschließendes Anschleifen des Kapillarendes erzeugt werden. Weiterhin ist es wichtig daß die Kapillare 1 bis an die Spitze ausreichend gut geheitzt ist. Aufgrund der kleinen Öffnung der Düse 2 besteht bei Auskondensation von Probenbestandteilen die Gefahr der Verstopfung. Neben den Möglichkeiten eine Widerstandsheizung über elektrisch leitende Beschichtung/Umhüllung oder eine optische Heizung über IR Strahlung zu realisieren, kann die Kapillare 1 auch mit einer thermisch gut leitenden Hülle umgeben werden, die außerhalb der beengten Ionenquelle beheizt wird und über thermische Wärmeleitung für eine ausreichenden Beheizung der Düse 2 sorgt,

Ansonsten ist eine Beheizung der Kapillare 1 über spezielle Widerstandsbeschichtungen möglich. Eine elegante Variante ist die Bestrahlung der Kapillaren 1 mit IR-Strahlung z. B. über ein Heizelement oder eine Laserdiode. Damit läßt sich vor allem die besonders kritische Düsenregion sehr gut heizen.

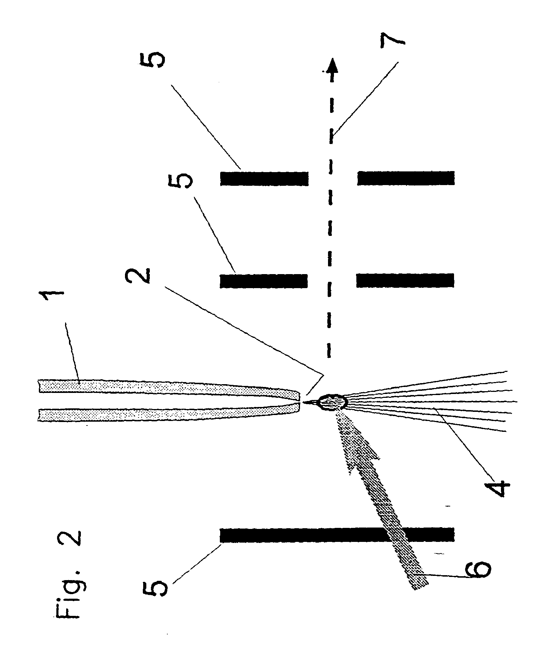

Der Betrieb des gattungsgemäßen Gaseinlasses in einer Ionenquelle eines Flugzeitmassenspektrometers ist im folgenden beschrieben. Das verengte Ende (Düse 2) der Kapillare 1 ragt ins Vakuum der Ionenquelle eines Massenspektrometers. Die Kapillare 1 besteht aus Quarzglas mit einem Innendurchchmesser von 530 µm und weist eine Düse 2 mit der Ausführungsform B nach Fig 1 mit einem Innendurchchmesser von 65 ± 10 µm auf. Das Ende der Kapillaren 1 mit der Düse 2 ist in einer ca. 3 cm langen dünnen Stahlhohlnadel (z. B. abgesagte Injektionsnadel) geführt, so daß die Spitze der Düse 2 gerade einige 10 µm über die Endkante der Stahlhohlnadel hervorragt. Die Stahlnadel ist mit einem Metallblock verbunden, der durch Heizpatronen beheizt werden kann. Außerdem kann die Nadel auf ein definiertes elektrisches Potential gelegt werden. Durch das aus dem Vakuumgehäuse herausragende Ende der Kapillare 1, die mit einer Graphit-Quetschdichtung gegen den Atmosphärendruck gedichtet ist, kann das Analysengas zugegeben werden. Hinter der Düse bildet sich im Vakuum ein Gasstrahl aus. Die Düse wirkt dabei als Restriktor, so daß der Fluß durch die Kapillare nur etwa 10 ml/ min bei 1 bar beträgt und gute Vakuumbedingungen von etwa 10⁻⁴ mbar in Ionenquelle herrschen. Die Expansion über die Restriktion ins Vakuum führt zur Ausbildung eines kontinuierlichen Überschall-Molekularstrahls 4 mit adiabatischer Kühlung der Probenmoleküle. Diese adiabatische Kühlung ist bedeutend z. B. für Anwendungen zur Selektivitätssteigerung resonanzverstärkten Multiphotonenionisation - Massenspektrometrie (REMPI-TOFMS). Die Kapillare 1 ragt dabei zwischen die Blenden 5 der Ionenquelle des Massenspektrometers. Die Kapillare 1 mit der Düse 2 kann dabei im Zentrum der Ionenquelle des Massenspektrometers enden. Dies ist vorteilhaft, da die Ionisation z. B. mit einem Laserstrahl 6 direkt unter oder sehr nah (z. B. 1 - 30 mm) unterhalb der Düsenöffnung 2 erfolgen kann. Die gebildeten Ionen (7) werden dann durch Abzugsblenden 5 in das Flugzeitmassenspektrometer zur Massenanalyse abgezogen. Da sich die Dichte des Überschall-Molekularstrahls 4 im Vakuum mit dem Quadrat des Abstandes zur Düsenöffnung verringert, wird durch die Ionisation direkt unter der Düse 2 eine deutlich höhere Empfindlichkeit erreicht. Der Grad der Kühlung hängt dabei ebenfalls vom Abstand zur Düse 2 ab [4]. Typischerweise ist die optimale Kühlung 20 Düsendurchmesser unterhalb der Düsenöffnung 2 erreicht. Außerdem ist direkt unterhalb der Düse 2 mit Ionen-Molekül Reaktionen zu rechnen [4]. Da der Düsendurchmesser der Düse 2 sehr klein (typisch 0,1 - 200 µm) ist, kann die optimale Kühlung schon im Abstand von 2 - 4000 µm erreicht werden. Weiterhin kann ab diesem Abstand ein stoßfreies Regime als gegeben angenommen werden(d. h. keine Ionen-Molekül Reaktionen finden statt, welche die Selektivität mindern könnten). Die Ionisation nahe der Düse 2 erlaubt es den Überschall-Molekularstrahl 4 in seiner vollen Breite mit dem Laser zu erfassen. Bei einer Geschwindigkeit des Überschall-Molekularstrahls 4 von ca. 500 m/s und einem strichförmigen Laserprofil von z. B.: 4mm x 10 mm mit einer Laserwiederholrate von 50 Hz wird bei einer Ionisation direkt unter Düse ein duty-cycle von 10⁻³ erreicht (d.h. jedes tausende Molekül im Überschall-Molekularstrahl 4 wird vom Laser erfaßt). Die Figur 2 zeigt schematisch die Anordnung der Kapillaren 1 mit Düse 2 zwischen den Blenden 5 des Flugzeitmassenspektrometers. Die Figur 3 zeigt ein REMPI-Spektrum, aufgenommen mit der in Fig. 2 dargestellten Anordnung. Das REMPI-Spektrum in Fig 3 zeigt eine Rotationskontur des Benzols. Aus dem Spektrum läßt sich eine Rotationstemperatur von 4 K ableiten. Dieses zeigt, daß auch mit Gasflüssen von unter 10 ml/min sehr gute Eigenschaften des Überschall-Molekularstrahls 4 erreicht werden können. Das REMPI-TOFMS Lasermassenspektrometer mit dem erfindungsgemäßen Gaseinlaß kann z. B. für Feldanwendungen, z. B. zur Analyse von Prozeßgasen, eingesetzt werden. Gegenüber dem Stand der Technik für diese Anwendung [7] hat der erfindungsgemäßen Gaseinlaß den Vorteil der erhöhten Selektivität durch die Kühlung des Gasstrahls bei gleichzeitig geringem apparativem Aufwand und einfacher Handhabung.

Der Betrieb eines erfindungsgemäßen Gaseinlasses in einer Fluoreszenzzelle ist noch einfacher, da keine Rücksicht auf die Anforderungen einer Ionenoptik, wie im Fall der Ionenquelle für das Massenspektrometer, genommen werden muß. Die Kapillare 1 kann hier also leicht mit Heizelementen versehen werden. Beispielsweise ist eine Umwicklung mit Heizdraht möglich. Weiterhin ist die Anforderung an das Vakuumsystem geringer, so daß eine sehr kompakte und preiswerte Vakuumzelle z. B. für Feldeinsätze der laserinduzierte Fluoreszenz-Detektion (LIF) aufgebaut werden kann. Die Fluoreszenz kann wellenlängendispergiert (z. B. mit einem Echelle-Spektrographen und CCD Detektor) oder integral aufgenommen werden. Wird die Anregungswellenlänge durchgestimmt, so können Anregungspektren aufgenommen werden. Ein dispergiert aufgenommenes Anregungspektrum ist ein zweidimensionales Spektrum (Fluoreszenzsignal als Funktion der Anregungs- und Emissionswellenlänge). Als weitere analytische Dimension kann die Abklingzeit der Fluoreszenz eingesetzt werden, da verschiedene Verbindungen unterschiedliche Fluoreszenz-Lebensdauern aufweisen. Die Kombination einer kleinen Vakuumkammer mit einem erfindungsgemäßen Gaseinlaß, einem Anregungslaser und einer Fluoreszenz-Detektor stellt ein ideales (mobiles) Gasanalysesystem für nicht zu komplexe Gasproben dar. Der Überschall-Molekularstrahl 4 erlaubt dabei eine deutliche Steigerung der Selektivität gegenüber einem effusivem Einlaß. Durch Anfahren von charakteristischen Absorptionslinien mit einem durchstimmbaren, schmalbandigen Laser (z. B. einem kompakten Optischen Parametrischen Oszillator, OPO) kann eine on-line Einzelstoffanalyse erfolgen. Dabei wird z. B. der Laser zuerst auf die Absorptionsbande abgestimmte ("on resonance") und das LIF Signal gemessen. Danach wird das LIF Signal an einer oder mehrern Wellenlängenpositionen bestimmt, an denen die Zielsubstanz nicht absorbiert ("off resonance"). Aus den Differenzen der "on-" und "off-resonance"-Signale läßt sich dann die Konzentration der Zielsubstanz ermitteln.

Für eine kostengünstige Prozeßanalytik mit dem Ziel z. B. einen Summenparameter für die fluoreszierenden Aromaten on-line zu ermitteln, kann die Anwendung einer einzigen Wellenlänge, z. B. der vierten harmonischen des Nd:Yag Lasers (266 nm), sinnvoll sein. Der erfindungsgemäße Gaseinlaß kann auch für einen preiswerten aromatenselektiven LIF-Detektor für die Gaschromatographie eingesetzt werden. In der HPLC-Analytik von PAK ist z. B. Fluoreszenz-Detektion Stand der Technik. Die Verwendung des erfindungsgemäßen Gaseinlasses für eine kompakten Vakuumzelle für die LIF-Detektion würde also der Gaschromatographie einen Detektor mit vergleichbaren Eigenschaften einer HPLC-Fluoreszenz Analytik, jedoch mit höherer Selektivität und Empfindlichkeit an die Hand geben. Die Selektivität kann weiterhin durch die Wahl des Anregungsortes in Überschall-Molekularstrahl 4 eingestellt werden. Direkt unter der Düse 2 ist die adiabatische Kühlung des Überschall-Molekularstrahls 4 noch nicht ausgebildet. Die Selektivität ist hier relativ gering. Weiter unterhalb der Düse 2 ist die Selektivität aufgrund der sich ausbildenden Kühlung des Gasstrahles 4 sehr hoch. Durch die starke Bündelung des aus der Düse 2 austretenden Überschall-Molekularstrahls 4 ist die Empfindlichkeit gegenüber effusivem Einlaß erhöht. Die Verwendung von zwei oder mehr Wellenlängen erlaubt darüber hinaus eine Diskriminierung zwischen Aromaten mit kleinem und großem π-System. Mit 266 nm (Nd:Yag) oder 248 nm (KrF-Excimer) lassen sich kleine Aromaten wie Benzol, Toluol und Xylol (BTX) oder Phenole sowie größere polyzyklische Aromaten (PAK) zur Fluoreszenz anregen. Bei längerwelligem UV Licht wie z. B. 355 nm (dritte harmonische Frequenz des Nd:YAG Lasers) werden BTX und vergleichbare kleine Aromaten nicht angeregt, während viele größere PAK bei dieser Wellenlänge sehr effizient über LIF detektiert werden können.

### Beschreibung der Abbildungen

### Figur 1

Verschiedene Formen A bis D der Düse 2 für die Kapillare 1. Bei der Verwendung einer durchbohrten Scheibe als Düse 2 in der Düsenform A kann diese entweder aufgeklebt oder mit einer Quetschverbindung 3 befestigt werden. Die Düsenform B kann durch Zuschmelzen und vorsichtiges Wiederaufschleifen hergestellt werden. Die Düsenform C entspricht einer Laval-Düse und kann durch vorsichtiges lokales Aufschmelzen hergestellt werden

### Figur 2

Mögliche Anordnung des erfindungsgemäßen Gaseinlasses in einer Ionenquelle eines Massenspektrometers mit REMPI-Ionisierung durch Laserpulse 6. Die Kapillare 1 ragt dabei zwischen die Abzugsblenden 5 der Ionenquelle. Der sich bildende kontinuierliche Überschallmolekularstrahl 4 wird möglichst nahe an der Düse 2 vom Ionisationslaserpuls 6 erfaßt. Die gebildeten Ionen werden durch elektrische Felder entlang der Trajektorie (7) in das Massenspektrometer zur Massenanalyse beschleunigt. Der Überschallmolekularstrahl 4 fällt direkt in eine Vakuumpumpe. Nicht abgebildet sind Heizelemente und die leitende Beschichtung/Umhüllung der Kapillaren 1 sowie der Übergang in Vakuum mit Dichtung.

### Figur 3

REMPI-Spektrum der v6 im ersten angeregten Singulettzustand von Benzol aufgenommen mit einem erfindungsgemäßen Gaseinlaß, wie er in Figur 2 dargestellt ist. Argon mit einigen 10 ‰ Anteilen an Benzol (1 bar) wurde durch die Kapillare 1 und Düse 2 der Düsenformen B (Fig.1) in die Ionenquelle eines REMPI-TOFMS Massenspektrometers expandiert. Der freie Düsendurchmesser betrug dabei etwa 65µm bei einem Kapillarendurchmesser von 530 µm. Die Gasflußrate war 9,4 ml/min, der Druck in der Ionenquelle betrug 5*10⁻⁴ mbar. Das Spektrum zeigt die Rotationskontur der v6. Aus der Rotationskontur läßt sich die Rotationstemperatur zu ca. 4 K bestimmen [9]. Diese ausgezeichnete Rotationskühlung zeigt, daß der erfindungsgemäße Gaseinlaß die Erzeugung eines kontinuierlichen Überschall-Molekularstrahls 4 mit guten Eigenschaften für analytische Anwendungen erlaubt.

### Literatur:

[1]
   A) R. Tembreull, C. H. Sin, P. Li, H. M. Pang, D. M. Lubman; Anal. Chem. 57 (19985) 1186;
   B) R. Zimmermann, U. Boesl, C. Weickhardt, D. Lenoir, K.-W. Schramm, A. Kettrup, E. W. Schlag, Chemosphere 29 (1994) 1877
[2]
   A) U. Boesl, H. J. Neusser, E. W. Schlag; US-PS 4,433,241.
   B) R. Zimmermann, H. J. Heger, A. Kettrup, U. Boesl, Rapid. Communic. Mass Spektrom. 11 (1997) 1095
[3] H. Oser, R. Thanner, H.-H. Grotheer, Combust, Sci. And Tech. 116 - 117 (1996) 567
[4] R. Zimmermann, H. J. Heger, E. R. Rohwer, E. W. Schlag, A. Kettrup, U. Boesl, Proceedings of the 8th Resonance Ionization Spectroscopy Symposium (RIS-96), Penn State College 1996, AIP-Conference Proceeding 388, AIP-Press, Woobury, New York (1997) 119
[5]
   A) DE 195 39 589.1
   B) EP 0 770 870 A2
[6]
   A) B. V. Pepich, J. B. Callis, D. H. Burns, M. Grouterman, D. A. Kalman, Anal. Chem. 58 (1986) 2825;
   B) B. V. Pepich. J. B. Callis, J. D. Sh. Danielson, M. Grouterman, Rev. Sci. Instrum. 57 (1986) 878.
[7] H.J.Heger, R.Zimmermann, R.Dorfner, M.Beckmann, H.Griebel, A.Kettrup, U.Boesl, Anal. Chem. 71 (1999) 46-57
[8] E.J.Guthrie, H.E.Schwartz, J. Chromatogaph. Sci. 24 (1986) 236-241
[9] R.Zimmermann, Ch.Lermer, K.W.Schramm, A.Kettrup, U.Boesl, Europ. Mass Spectrom. 1 (1995) 341-351
[10] J. E. Doskow, F. Sperisen, Nucl. Instrum. Meth. Phys. Res. A 362 (1995) 20-25

## Patentansprüche

1. Gaseinlaß zur Erzeugung eines gerichteten und gekühlten Gasstahls in einer Ionenquelle mit einem Gaseinlass oder einer UV/Fluoreszenzmeßzelle mit einem Gaseinlass, bestehend aus einer Kapillaren (1), die gasdicht von außen in das evakuierte Innere der Anordnung der Ionenquelle oder der UV/Fluoreszenzmeßzelle führt und deren im Vakuum befindliches Ende eine Expansionsdüse (2) zur adiabatischen Kühlung des Gases aufweist, wobei die lichte Weite der Düsenöffnung höchstens 50 % des Kapillareninnendurchmessers beträgt, und Mitteln zum Heizen der Kapillaren und der Expansionsdüse auf Temperaturen von mehr als 200°C.

2. Gaseinlaß nach Anspruch 1, **dadurch gekennzeichnet, daß** die Kapillare (1) aus Keramik, Glas oder Quarzglas besteht.

3. Gaseinlaß nach Anspruch 1 oder 2, **dadurch gekennzeichnet, daß** die Außenseite der Kapillare (1) mit leitfähigem Material beschichtet ist, wobei der Bereich der Düse (2) unbeschichtet bleiben kann.

4. Gaseinlaß nach Anspruch 1 oder 3, **dadurch gekennzeichnet, daß** die Kapillare aus (1) Metall besteht, welches auf der Innenseite z. B. durch Silanisierung deaktiviert ist.

5. Gaseinlaß nach einem der Ansprüche 1 bis 4, **dadurch gekennzeichnet, daß** die lichte Weite der Düsenöffnung (2) weniger als 15% des Kapillareninnendurchmessers beträgt.

6. Gaseinlaß nach einem der Ansprüche 1 bis 4, **dadurch gekennzeichnet, daß** die Kapillare (1) einen Innendurchmesser von 500 ± 350 µm und die Düse (2) einen Durchmesser von 5 - 20% davon hat.

7. Gaseinlaß nach einem der Ansprüche 1 bis 6, **dadurch gekennzeichnet, daß** die Kapillare (1) derart in die Ionenquelle eines Massenspektrometers eingebaut ist, daß die Ionisation im Bereich von 0-30 mm unterhalb der Düsenöffnung (2) erfolgen kann.

8. Gaseinlaß nach einem der Ansprüche 1 bis 7, **dadurch gekennzeichnet, daß** die Düse (2) der Kapillare (1) 0 bis 30 mm über der Abzugsöffung bzw. dem Ionisationsort der Ionenquelle oder über dem Anregungsvolumen der Fluoreszenzzelle endet.

9. Verwendung eines Gaseinlasses nach einem der Ansprüche 1 bis 8 zur Einkopplung des Eluenten eines Gaschromatographen oder eines Gasstroms aus einer on-line Probennahmesonde in ein Analysegerät mit einem Gaseinlass, z. B. eine Fluoreszenzzelle oder eine Ionenquelle mit Gaseinlass eines Massenspektrometers.

## Claims

1. Gas inlet for generating a directed and cooled gas jet in an ion source having a gas inlet or a UV/fluorescence measuring cell having a gas inlet, consisting of a capillary (1) leading in a gastight manner from the outside into the evacuated interior of the ion source or UV/fluorescence measuring cell configuration, the end of the capillary located in the vacuum comprising an expansion nozzle (2) for adiabatic cooling of the gas, the width of the bore of the nozzle opening being at most 50 % of the capillary inner diameter, and means for heating the capillary and the expansion nozzle to temperatures exceeding 200 °C.

2. Gas inlet according to claim 1, **characterised in that** the capillary (1) consists of ceramic, glass, or fused quartz.

3. Gas inlet according to claim 1 or 2, **characterised in that** the exterior of the capillary (1) is coated with a conductive material, the area of the nozzle (2) optionally remaining uncoated.

4. Gas inlet according to claim 1 or 3, **characterised in that** the capillary (1) consists of metal, deactivated on the inside e.g. by silanisation.

5. Gas inlet according to any one of claims 1 to 4, **characterised in that** the bore of the nozzle opening (2) is less than 15 % of the capillary inner diameter.

6. Gas inlet according to any one of claims 1 to 4, **characterised in that** the capillary (1) comprises an inner diameter of 500 ± 350 µm and the nozzle (2) comprises a diameter of 5 - 10 % thereof.

7. Gas inlet according to any one of claims 1 to 6, **characterised in that** the capillary (1) is installed in the ion source of a mass spectrometer in such a way as to enable the ionisation to occur within a range of 0 - 30 mm downstream of the nozzle opening (2).

8. Gas inlet according to any one of claims 1 to 7, **characterised in that** the nozzle (2) of the capillary (1) ends 0 to 30 mm upstream of the vent resp. the ionisation site of the ion source, or of the excitation volume of the fluorescence cell.

9. Use of a gas inlet according to any one of claims 1 to 8 for injecting the eluent of a gas chromatograph or a gas stream from an on-line sampling probe into an analytical apparatus having a gas inlet, e.g. a fluorescence cell or an ion source having a gas inlet of a mass spectrometer.

## Revendications

1. Admission de gaz pour la génération d'un jet de gaz orienté et refroidi dans une source d'ions, comportant une admission de gaz ou une cellule de mesure à fluorescence / UV avec une admission de gaz, constituée d'un tube capillaire (1) qui, à partir de l'extérieur, pénètre de façon étanche aux gaz à l'intérieur sous vide de la disposition de la source d'ions ou de la cellule de mesure à fluorescence / UV, et dont l'extrémité située dans le vide comporte une buse d'expansion (2) pour le refroidissement adiabatique du gaz, la largeur utile de l'ouverture de la buse étant au maximum égale à 50 % du diamètre intérieur du tube capillaire, et de moyens pour porter le tube capillaire et la buse d'expansion à des températures supérieures à 200 °C.

2. Admission de gaz selon la revendication 1, **caractérisée en ce que** le tube capillaire (1) est en céramique, en verre ou en verre au quartz.

3. Admission de gaz selon la revendication 1 ou 2, **caractérisée en ce que** la face extérieure du tube capillaire (1) est revêtue de matériau conducteur, la zone de la buse (2) pouvant rester non revêtue.

4. Admission de gaz selon la revendication 1 ou 3, **caractérisée en ce que** le tube capillaire (1) est en métal dont la face intérieure est désactivée, par exemple par silanisation.

5. Admission de gaz selon l'une des revendications 1 à 4, **caractérisée en ce que** la largeur utile de l'ouverture de la buse (2) est égale à moins de 15 % du diamètre intérieur du tube capillaire.

6. Admission de gaz selon l'une des revendications 1 à 4, **caractérisée en ce que** le diamètre intérieur du tube capillaire (1) est de 500 ± 350 µm, et **en ce que** le diamètre de la buse (2) est de 5 à 20 % par rapport à cela.

7. Admission de gaz selon l'une des revendications 1 à 6, **caractérisée en ce que** le tube capillaire (1) est intégré dans la source d'ions d'un spectromètre de masse de telle sorte que l'ionisation puisse avoir lieu dans la zone située de 0 à 30 mm sous l'ouverture de la buse (2).

8. Admission de gaz selon l'une des revendications 1 à 7, **caractérisée en ce que** la buse (2) du tube capillaire (1) se termine 0 à 30 mm au-dessus de l'ouverture d'évacuation ou de l'emplacement d'ionisation de la source d'ions ou au-dessus du volume d'excitation de la cellule à fluorescence.

9. Utilisation d'une admission de gaz selon l'une des revendications 1 à 8 pour le couplage de l'éluant d'un chromatographe en phase gazeuse ou d'un flux gazeux provenant d'une sonde d'échantillonnage en ligne dans un appareil d'analyse comportant une admission de gaz, par exemple une cellule à fluorescence ou une source d'ions avec admission de gaz d'un spectromètre de masse.
